# EUROPÄISCHE PATENTANMELDUNG

(11) **EP 1 757 509 A2**
(43) Veröffentlichungstag der Anmeldung: **28.02.2007**
(21) Anmeldenummer: 06016896.0
(22) Anmeldetag: 12.08.2006
(51) Int. Cl.: B62B 3/00

(54) **Transportwagen**

(30) Priorität: 25.08.2005 DE 202005013493 U
(71) Anmelder: Wanzl Mettallwarenfabrik GmbH, 89336 Leipheim (DE)
(72) Erfinder: Wanninger, Lothar, 87719 Mindelheim (DE)

(57) **Zusammenfassung**

Die Erfindung betrifft einen von Hand bewegbarer Transportwagen (1) mit einem Fahrgestell (2), mit am Fahrgestell (2) angeordneten Seitenteilen (3), mit Etagen (4), die lösbar an den Seitenteilen (3) angeordnet sind und mit einem Deckel (5), wobei Seitenteil (3) und Deckel (5) einen Rahmen (6) und ein von dem Rahmen (6) eingefasstes Gitter (7) aufweist, und wobei jedes Seitenteil (3) zur Bildung einer vorzugsweise rechteckigen Grundfläche mit einem weiteren Seitenteil (3) und mit dem Deckel (5) lösbar verbunden ist, und wobei der Transportwagen (1) eine Tür (8) aufweist, die durch ein Seitenteil (3) oder einen Teil des Seitenteils (3) gebildet ist.

Die Erfindung zeichnet sich dadurch aus dass ein erster und ein zweiter Rahmen (6.1), (6.2) vorgesehen ist, wobei jeder erste Rahmen (6.1) vorzugsweise als Tür (8) gebildet ist und jeder zweite Rahmen (6.2) zur Aufnahme der übrigen Seitenteile (3) und des Deckels (5) vorgesehen ist.

## Beschreibung

Die Erfindung betrifft einen von Hand bewegbaren Transportwagen wie er zum Transport von Waren überwiegend in Lagern Verwendung findet, mit den Merkmalen im Oberbegriff des Hauptanspruchs.

Einen Transportwagen dieser Art beschreibt beispielsweise die deutsche Gebrauchsmusterschrift DE 73 189 68. In dieser Schrift ist ein Wagen aufgeführt, bei dem der jede Seitenwand in Rahmen eingefasste Gitter aufweist und bei dem die rechteckigen Rahmen ortsfest an dem Fahrgestell angeordnet sind. Eine der Seitenwände ist als Tür gebildet.

Eine weitere Art von Transportwagen beschreibt die deutsche Patentanmeldung DE 22 386 18. Dieser Transportwagen weist ebenfalls Seitenteile auf, die aus einem in einem Rahmen eingefasste Gitter bestehen. Jede Seitenwand ist ortsfest mit einem rechteckigen Fahrgestell verbunden. Die Seitenteile weisen Ösen und Augen auf, so dass die Seitenwände mittels eines Schlosses gesichert werden können. Auch ein Deckel kann auf diese Art an den Seitenteilen angebracht werden.

Darüber hinaus ist ein Transportwagen dieser Gattung aus der schweizer Patentschrift CH 621 095 A5 bekannt. Dieser Transportwagen weist ebenfalls ein rechteckiges Fahrgestell auf, bei dem an jeder Seite eine in einen Rahmen gefasste gitterförmige Wand integriert ist. Die Rahmen sind rechteckig geformt und Abschnitte eines Rahmens eines Seitenteiles sind als Tür gebildet und um eine waagrechte oder horizontale Achse kippbar.

Alle Transportwagen dieser Art sind zum Be- und Entladen von einer Seite zugänglich. Die lösbare Verbindung von Seitenwänden und Rahmen ist umständlich, ebenso wie das Anbringen eines Deckels.

Es ist Aufgabe der Erfindung, einen besseren Transportwagen aufzuzeigen.

Die Erfindung löst die Aufgabe mit den Merkmalen im Hauptanspruch.

Der größte Vorteil besteht darin, dass durch die Merkmale im Hauptanspruch ein verwindungssteifer Transportwagen gegeben ist, der zudem von mehr als nur einer Seite zum Bestücken oder zur Entnahme von Ware zugänglich ist.

Der Transportwagen kann in seine Einzelteile zerlegt werden und dadurch Platz sparend transportiert werden.

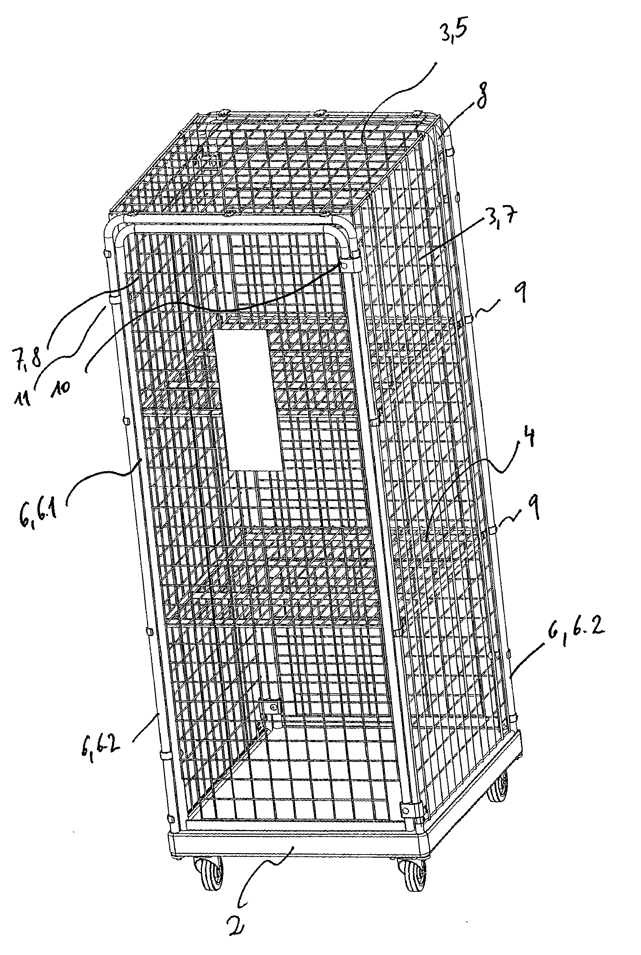

Die Erfindung wird anhand von einem Ausführungsbeispiel näher erläutert. Es zeigt
- Fig. 1: einen Transportwagen in 3-D-Ansicht mit einem ersten und einem zweiten Rahmen sowie Seitenteilen, Türen und einem Deckel.

Jeder Transportwagen 1 weist ein Fahrgestell 2 mit Seitenteilen 3, die zum Teil als Türen 8 gebildet sind, und einem Deckel 5 sowie Etagen 4 auf. Jede Tür 8 ist in einen ersten Rahmen 6.1 und jedes Seitenteil 3 inklusive Deckel 5 in einen zweiten Rahmen 6.2 integriert. Beide Rahmen 6 sind lösbar an der Oberseite des Fahrgestells 2 angeordnet. Das Fahrgestell 2 weist hierfür Ausnehmungen auf. Der erste Rahmen 6.1, zur Aufnahme vorzugsweise eines Gitters 7, ist als Tür 8 gebildet. Sinnvollerweise ist der erste Rahmen 6.1 kleiner gebildet als der zweite Rahmen 6.2, der alle Seitenteile 3 und den Deckel 5 aufnimmt.

Die Seitenteile 3 und der Deckel 5 können einteilig gebildet sein, oder aus zwei oder einer Vielzahl einzelner Teilen bestehen. Fig. 1 zeigt einen Transportwagen 1 bei dem die Seitenteile 3 sowie der Deckel 5 aus jeweils einzelnen Teilen gebildet sind. Die Seitenteile 3 und der Deckel 5 sind aus einem grobmaschigen Gitter 7 gebildet. Andere Ausführungen von flächigen Abgrenzungen sind dem Fachmann überlassen.

Es sind zwei zweite Rahmen 6.2 am Fahrgestell 2 angeordnet. Die zweiten Rahmen 6.2 dienen zur Aufnahme der Seitenteile 3 und des Deckels 5. Die Seitenteile 3 sind mittels Verbindungselementen 9 beidseitig an jedem zweiten Rahmen 6.2 angeordnet. Die Anzahl der Verbindungselemente 9 ist frei wählbar.

In der dargestellten Weise sind die Verbindungselemente 9 derart ausgeführt, dass sie neben dem Verbinden von jedem zweiten Rahmen 6.2 mit einem Seitenteil 3 oder einem Deckel 5 auch eine Aufnahme für die Etagen 4 bilden. Dadurch ist eine Verringerung der Teilevielfalt gegeben und die Stabilität des Transportwagens erhöht.

Beide Rahmen 6 sind vorzugsweise U-förmig und aus mehreren Teilen gebildet. Auch ist eine einteilige und/oder rechteckige Form des Rahmens 6 denkbar.

Die Anzahl der Türen 8 kann variieren. Es ist denkbar, dass zwei Seitenteile 3 als Tür 8 gebildet sind. Auch können übereinander mehrere Türen 8 in einen Rahmen 6.2 angeordnet werden. Die Verwindungssteifigkeit ist dennoch durch die Rahmen 6 weiterhin erfüllt.

Jeder erste Rahmen 6.1 ist mit einem zweiten Rahmen 6.2 lösbar verbunden. Bei der Anordnung von zwei Türen 8 an gegenüberliegenden Seitenteilen 3 erfolgt die Fixierung des ersten Rahmens 6.1 am zweiten Rahmen 6.2 vorzugsweise diagonal. Ein entsprechendes Beispiel zeigt Fig. 1. In dieser ist in 3-D-Ansicht exemplarisch ein Transportwagen beschrieben, der zwei Türen 8 aufweist. Beide Türen 8 sind diagonal zueinander gegenüberliegend mit ihren ersten Rahmen 6.1 am zweiten Rahmen 6.2 mittels Scharnieren 10 fixiert. Die Anzahl der Scharniere 10 ist frei wählbar. In Fig. 1 sind zwei Scharniere 10 vorgesehen. Andere Arten von Scharbieren sind auch denkbar

Vorzugsweise sind Anschlagteile 11 für jede Tür 8 vorgesehen. Die Anschlagteile 11 sind vorzugsweise jeweils an dem zweiten Rahmen 6.2 vorgesehen. Sie bieten auch die Möglichkeit, die Türen 8 beispielsweise mittels eines nicht näher dargestellten Schlosses zu sichern. Jedes Anschlagteil 11 ist ortsfest mit einem zweiten Rahmen 6.2 verbunden. Andere Arten von Befestigung bleiben dem Fachmann überlassen.

Der Transportwagen 1 weist ein rechteckiges Fahrgestell 2 auf. Dieses ist vorzugsweise aus einem Kunststoff gebildet. Aber auch andere Arten von Werkstoffen und Formen von Fahrgestellen sind denkbar.

### Bezugszeichenliste

- 1: Transportwagen
- 2: Fahrgestell
- 3: Seitenteil
- 4: Etage
- 5: Deckel
- 6: Rahmen
- 6.1: erster Rahmen / Tür
- 6.2: zweiter Rahmen / Seitenteile, Deckel
- 7: Gitter
- 8: Tür
- 9: Verbindungselement
- 10: Scharnier
- 11: Anschlagteil

## Patentansprüche

1. Von Hand bewegbarer Transportwagen (1) mit einem Fahrgestell (2), mit am Fahrgestell (2) angeordneten Seitenteilen (3), mit Etagen (4), die lösbar an den Seitenteilen (3) angeordnet sind und mit einem Deckel (5), wobei Seitenteil (3) und Deckel (5) einen Rahmen (6) und ein von dem Rahmen (6) eingefasstes Gitter (7) aufweist, und wobei jedes Seitenteil (3) zur Bildung einer vorzugsweise rechteckigen Grundfläche mit einem weiteren Seitenteil (3) und mit dem Deckel (5) lösbar verbunden ist, und wobei der Transportwagen (1) eine Tür (8) aufweist, die durch ein Seitenteil (3) oder einen Teil des Seitenteils (3) gebildet ist, **dadurch gekennzeichnet, dass** ein erster und ein zweiter Rahmen (6.1), (6.2) vorgesehen ist, wobei jeder erste Rahmen (6.1) vorzugsweise als Tür (8) gebildet ist und jeder zweite Rahmen (6.2) zur Aufnahme der übrigen Seitenteile (3) und des Deckels (5) vorgesehen ist.

2. Transportwagen nach Anspruch 1 **dadurch gekennzeichnet, dass** jeder erste und jeder zweite Rahmen (6.1), (6.2) aus einer nach unten offenen U-Form gebildet ist.

3. Transportwagen nach Anspruch 1 oder 2 **dadurch gekennzeichnet, dass** jeder erste Rahmen (6.1) kleiner gebildet ist als jeder zweite Rahmen (6.2).

4. Transportwagen nach einem der Ansprüche 1 bis 3 **dadurch gekennzeichnet, dass** zur Aufnahme der eingefassten Gitter (7) Verbindungselemente (9) zwischen jedem zweiten Rahmen (6.2) und den Gittern (7) vorgesehen sind.

5. Transportwagen nach einem der Ansprüche 1 bis 4 **dadurch gekennzeichnet, dass** Scharniere (10) für das Öffnen der Türen (8) vorgesehen sind.

6. Transportwagen nach einem der Ansprüche 1 bis 5 **dadurch gekennzeichnet, dass** Anschlagteile (11) an jedem zweiten Rahmen (6.2) vorgesehen sind, der an einem ersten Rahmen (6.1) angrenzt, welcher als Tür (8) gebildet ist.
